# EUROPEAN PATENT APPLICATION

(11) **EP 1 255 196 A1**
(43) Date of publication of application: **06.11.2002**
(21) Application number: 02394051.3
(22) Date of filing: 29.04.2002
(51) Int. Cl.: G06F 9/50

(54) **System and method for providing distributed computing services**

(30) Priority: 02.05.2001 US 847828
(71) Applicant: Gateway, Inc., North Sioux City, South Dakota 57049 (US)
(72) Inventor: Anderson, Glen J., Sioux City,IA 51104 (US); McKnight, Russell F., Sioux City,IA 51104 (US)
(74) Representative: McCarthy, Denis Alexis

(57) **Abstract**

A method for providing distributed computing services via a network is disclosed wherein an organization, in particular a manufacturer, distributor, or the like, leases computing resources on information handling systems (e.g., personal computers, network servers, information appliances, and the like) purchased or upgraded by customers. The leased computing resources are then utilized to provide distributed computing services to users of such services via a network such as the Internet or the like.

## Description

### Field of the Invention

The present invention generally relates to distributed computing systems and methods, and more particularly to a system and method for providing a network capable of providing distributed computing services by leasing computing resources on information handling systems (e.g. personal computers, network servers, information appliances, and the like) purchased by customers.

### Background of the Invention

Distributed computing allows large computing tasks normally performed by supercomputers to be efficiently performed by networks of smaller information handling systems such as personal computers, servers, information appliances, and the like. Distributed computing systems break a computing task into smaller constituent parts or blocks, each of which is sent to one or more personal computers via a network such as the Internet, an Intranet, or the like. Because the personal computers process the tasks assigned to them during idle times, no computing power is taken away from their normal users.

Until recently, distributed computing techniques were suited for only certain types of applications. If the computing task was one wherein individual blocks or parts could be processed independently, distributed computing worked well. However, for computing tasks having blocks that were dependent on other blocks of the task, distributed computing techniques were limited by bandwidth restrictions and volatility of the networks connecting the personal computers (e.g., the Internet).

The increasing prevalence of high bandwidth connections and information handling systems having fast processors and large hard drives creates an opportunity for even greater use of distributed computing techniques. For example, it is contemplated that personal computer users connected by a network such as the Internet may provide services to each other that have been traditionally provided by hosting services using large servers. Such services include storage of data, processing of large tasks, hosting of web content, and the like. However, there presently exists no procedure of efficiently and economically organizing the large number of computer users needed to provide distributed computing services.

### Summary of the Invention

Accordingly, the present invention is directed to a method for providing distributed computing services via a network wherein a service provider, in particular a manufacturer distributor, or the like, leases computing resources on information handling systems (e.g., personal computers, network servers, information appliances, and the like) purchased by customers. In exemplary embodiments, the method includes steps for negotiating an agreement with a customer for providing an information handling system to a customer ordered by the customer, leasing back computing resources of the information handling system provided to the customer as part of the negotiated agreement, configuring the information handling system for providing the leased back computing resources prior to provision of the information handling system to the customer; and using the leased back computing resources for providing distributed computing services.

It is to be understood that both the foregoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### Brief Description of the Drawings

The numerous advantages of the present invention may be better understood by those skilled in the art by reference to the accompanying figures in which:
FIG. 1 is a block diagram illustrating a network capable of furnishing distributed computing services by leasing computing resources on information handling systems purchased by customers;
FIG. 2 is a flow diagram illustrating a method for furnishing distributed computing services by leasing computing resources on information handling systems purchased by customers;
FIG. 3 is a flow diagram illustrating a method for furnishing distributed computing services by leasing computing resources on information handling systems purchased by customers wherein the information appliances may be configured for use in the network;
FIG. 4 is a flow diagram illustrating a method for furnishing distributed computing services by leasing computing resources on information handling systems purchased by customers wherein the customer is given an opportunity to renew his or her lease so as to continue providing computing resources;
FIG. 5 is a flow diagram illustrating a method for furnishing distributed computing services by leasing computing resources on information handling systems purchased by customers wherein compliance by the customer is monitored;
FIG. 6 is a flow diagram illustrating a method for furnishing distributed computing services by leasing computing resources on information handling systems purchased by customers wherein existing information appliances are upgraded to provide computing services; and
FIG. 7 is a block diagram illustrating an exemplary information appliance suitable for implementation of the system and method of the present invention.

### Detailed Description of the Invention

Reference will now be made in detail to the presently preferred embodiments of the invention, examples of which are illustrated in the accompanying drawings.

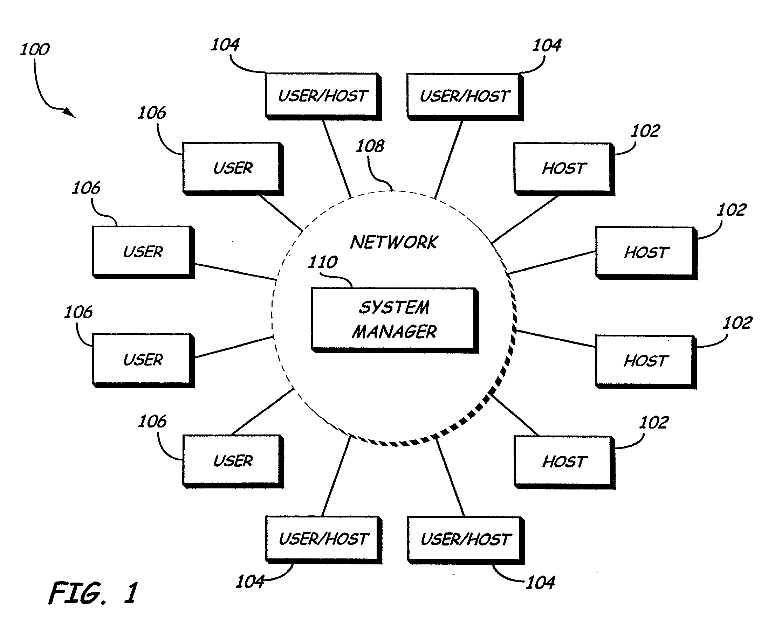

Referring now to FIG. 1, a system for providing distributed computing services wherein a provider organization leases computing resources on information handling systems purchased by customers of the provider organization is described. The system 100 includes a plurality of hosts 102 (and optionally user/hosts 104), each furnishing computing resources for use in providing distributed computing services to one or more users 106 (or other user/hosts 104) of those services via a network 108 such as the Internet, or the like. A system manager 110 integrates, organizes and manages the computing resources furnished by hosts 102 and user hosts 104 and the provision of distributed computing services to users 106 and other user/hosts 104. In preferred embodiments of the invention, an organization contracting with its customers for lease of their computing resources (e.g., an information handling system manufacturer, wholesaler, retailer, or the like) may function as system manager 110 for the system 100. Alternately, such an organization may contract with a third party to function as the system manager 110. Preferably, system manager 110 does not itself physically provide computing resources, but instead integrates and manages the provision of such resources by hosts 102 (and user/hosts 104) within the system 100. However, it is contemplated that in some embodiments of the invention, the system manager 110 may also provide some computing resources itself without departing from the scope and spirit of the invention. The system manager 110 may further provide and maintain hardware and software provided to the hosts 102 (and user/hosts 104) so that computing resources provided by the hosts 102 & 104 may be accessible to the distributed computing system 100. For example, the system manager 110 may periodically provide software upgrades to hosts 102 and user hosts 104 via the network 108, mailings, or the like, or hosts 102 and user hosts 104 may download such upgrades from the system manager 110 through a Web site maintained by the system manager 110 via the network 108.

As shown in FIG. 1, customers of the organization may choose to provide only computing resources, and not purchase or use distributed computing services provided by system 100, thus becoming hosts 102. Likewise, customers of the organization may choose to only use the distributed computing services provided by system 100, and provide no computing resources, thus becoming users 106. Alternately, customers of the organization may choose to both furnish computing resources and purchase distributed computing services provided by the system 100, thus becoming user/hosts 104. In exemplary embodiments of the invention, hosts 102 (and user/hosts 104) enter agreements or contracts with the organization providing the distributed computing system 100 for furnishing computing resources for use by users 106 (and other user/hosts 104). Likewise, users 106 (and user/hosts 104) agree or contract with the organization for purchasing distributed computing services utilizing the computing resources provided by hosts 102 (and other user/hosts 104).

In one embodiment, the organization is a company that sells information handling systems such as personal computers, network servers, information appliances, and the like. In such an embodiment, all information handling systems provided by the organization are optionally configured at the point of manufacture to function as hosts 102 (or user/hosts 104). In this manner, each customer of the organization has the potential to be a host 102 (or user/host 104) of the system 100. Alternately, each information system is optionally configured at the point of manufacture to function as a host 102 (or user/host 104) only if the customer so chooses. For example, information handling systems may be configured for functioning as a host 102 (or user host 104) by partitioning a portion of their hard drives so as to be invisible to the host. Similarly, information handling systems may be configured by providing special components (e.g., larger hard drives, cable modems, increased size bridge batteries, or the like) or software, providing a BIOS (Basic Input/Output System) allowing remote control of the system, presetting the IP (Internet Protocol) address or settings of the system, and the like.

Distributed computing services provided by the system 100 may include a wide variety of computing tasks such as storage of data, processing of large tasks, hosting of web content, data backup, virus protection, application leasing, and the like. For instance, in one embodiment, a host 102 (or user/host 104) having required hardware, software, and availability (e.g., the host 102 or user/host 104 would leave their system connected to the network during specified times), and the like may enter into a lease agreement or contract committing a portion of the computing resources furnished by the information handling system they purchased from the organization for use by the distributed computing system. These resources may then be used for Web hosting or like tasks. In consideration for the furnished computing services, the host 102 (or user/host 104) is provided compensation or incentives corresponding to the computing resources made available. For example, the host 102 (or user/host 104) may receive a reduced purchase price or lease rate for the information handling system on which the computing resources are leased by the organization, free hardware upgrades or a reduction in the price of hardware upgrades, free Internet service or reduced Internet service rates, and the like. The organization may then enter agreements or contracts with consumer users 106 (or other user/hosts 104) for providing hosting of the Web sites of users 106. Preferably, the Web sites are hosted using the computing resources provided by one or more hosts 102 and user/hosts 104 so that the content of the sites is distributed among the hosts 102 and user/hosts 104 of the system 100. To safeguard content of the Web sites, all information from each Web site may be stored by the information handling system of at least two hosts 102 or user/hosts104, and/or content may be stored redundantly by more than one host, thereby providing redundancy and content protection. Further, should a Web site receive too many hits in a given time period, the site could be replicated by other hosts 102 or user/hosts 104 within the system 100. The organization may then collect fees from users and compensate contracting hosts 102 and user/hosts 104 for the computing resources used in hosting content of the Web sites. Wherein a user/host 104 provides computing resources, such compensation may be based on a sliding scale, or the like. In this manner, the user/host 104 may receive distributed computing services of the system as at least partial compensation for the computing resources provided.

In embodiments of the invention, the organization providing system 100 may generate revenue in a variety of ways. For instance, users 106 may agree to pay the organization for the distributed computing services provided. For example, a user may pay the organization to have its Web sites hosted by hosts 102 and user/hosts 104 on the network 108. The organization may also sell hardware and services (e.g., larger hard drives, higher bandwidth Internet connections) to the contracting hosts 102 and user/hosts 104. The organization may further sell advertising space on all content hosted by the system 100. Additionally, the organization may defer traditional operating costs compared to traditional Internet servers, Supercomputer providers, and the like, allowing better margins on the distributed services. For example, in accordance with the present invention contracting hosts 102 and user/hosts 104 purchase or lease the information handling systems providing the computing resources, and thus may be required to maintain their hardware and pay electricity and other over-head costs.

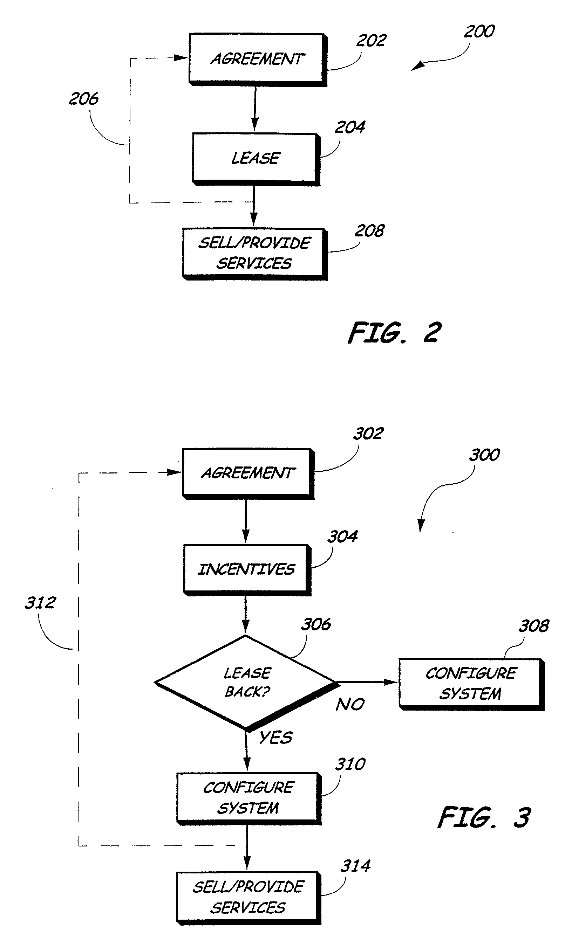

Referring now to FIG. 2, an exemplary method for furnishing distributed computing services in accordance with the present invention is described. The method 200 allows an organization, in particular an information handling system manufacturer, distributor, retailer, or the like, to lease back computing resources on information handling systems (e.g., personal computers, network servers, information appliances, and the like) sold, leased or otherwise provided to the customers of the organization. As shown in FIG. 2, the method 200 is initiated at step 202, wherein the organization and a customer enter into an agreement, such as a purchase order (PO), lease contract, or the like, for the acquisition of an information handling system by that customer. As part of the agreement, the customer contracts to lease computing resources on the information handling system back to the organization at step 204. In the embodiment shown in FIG. 2, each information handling system provided by the organization may be pre-configured to be capable of providing access to the computing resources leased by the organization. For instance, the information handling systems may include hard drives that are partitioned so that a portion of the hard drive volume is invisible to and cannot be accessed by the customer during his or her use of the system. This partitioned portion of the hard drives may then be used by the organization for distributed storage of information. Similarly, information handling systems may be configured by providing special components (e.g., larger hard drives, cable modems, increased size bridge batteries, or the like) or software, providing a BIOS (Basic Input/Output System) allowing remote control of the system, presetting the IP (Internet Protocol) address or settings of the system, and the like for use in providing distributed computing services to users. Preferably, as indicated by dashed line 206, steps 202 and 204 are repeated each time an information handling system is provided (e.g., sold, leased or given) to a customer. In this manner, the organization may conveniently lease computing resources on a large number of information handling systems thereby providing sufficient computing resources for distributed computing user customers. The organization may then enter into agreements, at step 208, with such user customers for providing distributed computing services via a network such as the Internet or the like using the leased back computing resources.

Referring now to FIG. 3, an exemplary method for furnishing distributed computing services in accordance with the present invention is described wherein information appliances sold or leased to customers by an organization such as a manufacturer/retailer are configured at their point of manufacture for use in providing distributed computing services. The method 300 is initiated at step 302, wherein the organization and a customer enter into an agreement, such as a purchase order (PO), lease contract, or the like, for the acquisition of an information handling system by that customer. As part of the agreement, the customer may be offered an agreement to lease computing resources on the information handling system back to the organization. Preferably, to induce the customer to enter the agreement, the organization may offer the customer one or more incentives for leasing back computing resources of the information appliance at step 304. For example, the customer may be offered such incentives as a reduced purchase price or lease rate for the information handling system on which the computing resources are leased by the organization, free hardware upgrades or a reduction in the price of hardware upgrades, free Internet service or reduced Internet service rates, and the like. It will be appreciated that incentives for entering the lease agreement, such as, for example, hardware, BIOS and software upgrades, may also provide additional computing resources for use by the organization, making the information handling system more well suited for providing distributed computing services. Alternately, the organization may offer monetary incentives such as monthly payment of those customers who agree to lease computing resources to the organization. The organization may then offer to sell upgrades with the incentive of larger monthly payments. Finally, the purchase of second and third information handling systems, home network infrastructures, and the like may be encouraged through the provision of such incentives.

The customer may then decide to accept or reject the lease back agreement at step 306. If the customer declines the incentives and does not wish to enter the agreement to lease back computing services at step 306, the information appliance being provided to the customer is configured for not providing computing resources at step 308. For example, the information handling system provided to the customer may be configured with a smaller hard drive than would be otherwise provided, or the hard drive partitioned to provide additional memory for use by the customer. Further, a BIOS that does not allow remote control of the system may be installed, or software necessary for sharing computing resources for provision of distributed computing resources may be deleted or disabled. If, at step 308, the customer instead accepts the incentive offered and agrees to lease back computing resources to the organization, the information handling system provided to the customer is configured at step 310 for furnishing computing resources for use by the organization in providing distributed computing services. For example, the information handling system purchased by the customer may be configured at the point of manufacture by providing special components (e.g., larger hard drives, cable modems, increased size bridge batteries, uninterruptable power supplies (UPS), or the like) or software necessary for sharing computing resources, providing a BIOS (Basic Input/Output System) allowing remote control of the system, presetting the IP (Internet Protocol) address or settings of the system, and the like. The information handling system may further be provided with some type of indicia informing third parties that the system is configured for provision of computing resources. Similarly, the system may include a light or other indicator for displaying when the system is being remotely controlled. Preferably, as indicated by dashed line 312, steps 302 through 310 are repeated each time an information handling system is sold to a customer allowing the organization to lease computing resources on a sufficient number of information handling systems so as to be capable of providing desired distributed computing services. The organization may then enter agreements, at step 314, with customers seeking use of such distributed computing services.

In one example of the method shown in FIG. 3, a consumer customer, for example an individual or a family, purchases a personal computer system from a computer manufacturer such as Gateway Inc. The customer also purchases a cable modem and Internet service from the manufacturer, which may either function as the Internet Service Provider (ISP) for the customer, or may contract this service with a third party. As part of the purchase agreement (PO), the customer agrees to leave the personal computer on for specified times during the day (e.g., 24 hours a day, between 10 p.m. and 5 a.m., etc.), and to lease back to the manufacturer fifteen percent (15%) of the hard drive space of the computer system and access to its processing system between 11 p.m. and 7 a.m. In consideration of this agreement, the manufacturer may offer a combination of one or more incentives such as free technical and hardware support for as long as the agreement remains in place, a 15% discount on the initial purchase, or a discount on the monthly Internet fee, free hardware upgrades, and the like. For example, if the customer orders a 20 GB hard drive and a 750MH processor, the manufacturer may offer, as an incentive, to upgrade the personal computer to a 40 GB hard drive and a 1 GHz processing system. The manufacturer may then configure the personal computer ordered by customer with the necessary software and settings (e.g., a remote backup utility, an IP addresses, a firewall, etc., a 40 GB hard drive, a 1 GH processing system, and the like) for use in providing distributed computing services such as, for example, backing up the data of other customers, hosting personal Web sites of other customers, or contributing to distributed processing of data. Any distributed computing service customers of the manufacturer (e.g., business partners, other customers of the manufacturer, etc.) may then be provided with information providing access to the computing resources provided by the customer. Such access may be automated, and/or may be made invisible to both the third party and the customer. For example, if the computing resources shared by the customer are to be used as redundant backup space, the appropriate IP address may be stored in a database maintained by the manufacturer, a third party system manager, or the like, and associated with a given backup task.

In a second example of the method shown in FIG. 3, a customer such as, for example, a small business purchases a server, several workstation computers, high-speed Internet access, and a service contract from the manufacturer. As part of the purchase agreement (PO), the customer agrees to lease a portion of the server hard drive space and processing resources of the server, and optionally other computers connected to the server within the customers internal network, during non-business hours. In consideration of this agreement, the manufacturer may offer a combination one or more incentives such as direct monthly payments for the resources used, a free service contract, free Internet service, or the like. Incentives and/or payments may be linked to regular equipment upgrades, additional equipment and services or increased time, processing power and storage space. Alternately, if the business customer utilized a Web site, the manufacturer, may exchange free hosting of the Web site in exchange for provision of computing resources by the customer.

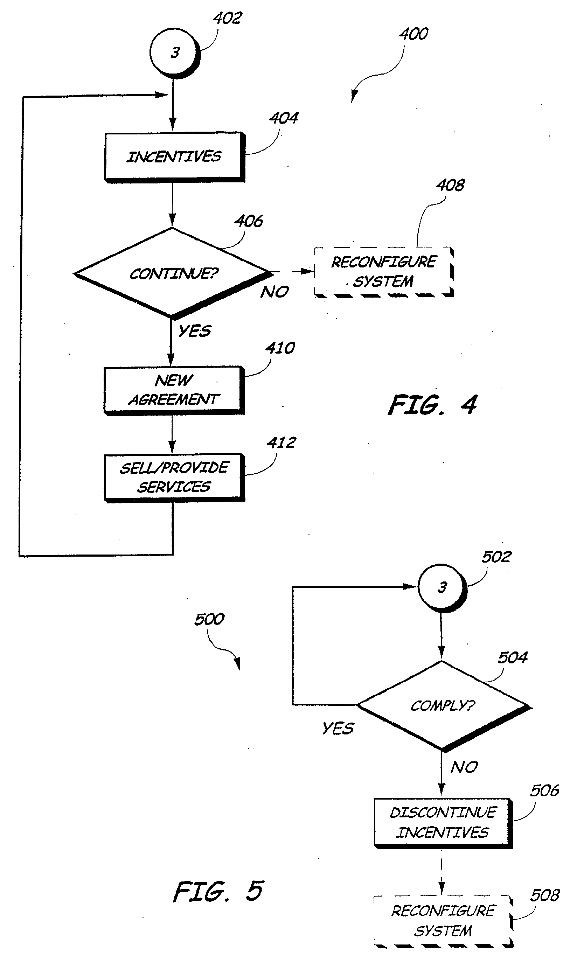

Referring now to FIG. 4, it is contemplated that either the customer or the organization may wish to limit the initial term of a lease back agreement. Consequently, when such an agreement terminates or is about to terminate, it may be desirable to renew the lease back agreement or to enter a new agreement so that the customer may continue furnishing computing services. In FIG. 4, an exemplary method 400 is shown wherein the customer is given an opportunity to continue providing computing resources after the expiration of his or her initial lease back agreement in exchange for additional incentives. In the embodiment shown, when an existing lease agreement with a customer, for example a lease agreement entered into in accordance with method 300 of FIG. 3, has ended or is about to end at step 402, the leasing organization may offer the customer additional incentives to renew the lease agreement or to enter into a new lease agreement at step 404. For example, the customer may be offered such incentives as free hardware upgrades or a reduction in the price of hardware upgrades, free Internet service or reduced Internet service rates, and the like. Such incentives may merely be a continuation of incentives provided under the existing lease agreement, or may differ from the incentives initially provided. The customer may then decide to accept or reject the lease back agreement at step 406. If the customer declines the incentives and does not wish to lease back computing services at step 406, the information handling system purchased by the customer may optionally be reconfigured so that it no longer is capable of furnishing computing resources at step 408, thereby freeing any resources of the information handling system used by the organization during the original lease. However, if the customer accepts the incentive offered by the organization and agrees to continue leasing computing resources at step 406, the organization and customer enter into a new lease agreement (or alternately, the existing agreement is simply renewed) at step 410. The organization may then continue to use the computing resources furnished by the customer to provide distributed computing services to end users at step 412. Each time the lease agreement expires, if about to expire, or is terminated under terms of the lease, steps 402 through 412 may be repeated as desired by the organization and the customer.

It is further contemplated that a customer may fail to honor one or more provisions of the lease agreement entered into in accordance with the present invention. In FIG. 5, an exemplary method 500 is shown wherein compliance by the customer with provisions of the agreement is monitored by the organization. In the embodiment shown, when an existing lease agreement, for example a lease agreement entered into in accordance with method 300 of FIG. 3, with a customer is in existence at step 502, the customer is monitored for compliance with provisions of the lease agreement at step 504. If the customer is found to be not in compliance with the lease at step 504, incentives provided to the customer may be discontinued according to provisions of the lease agreement at step 506. Further, the information handling system purchased by the customer may be reconfigured at step 508 to remove components, software, BIOS, or the like originally configured for use in providing distributed computing services.

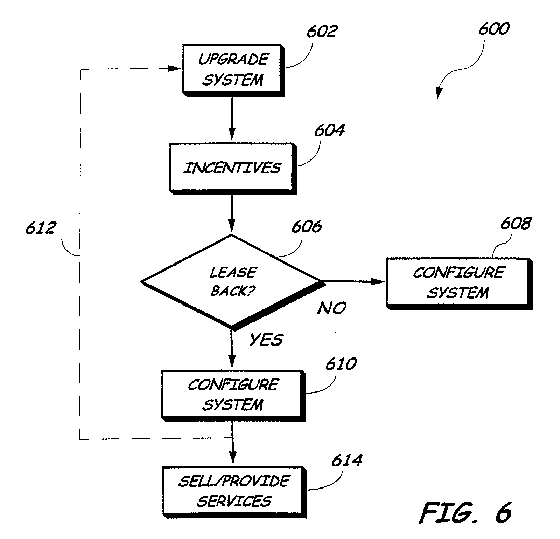

Referring now to FIG. 6, a method for furnishing distributed computing services by leasing computing resources on information handling systems already purchased by customers is described. The method 600 is initiated at step 602, wherein the organization and customer enter into an agreement such as a purchase order (PO) or lease for upgrading an information handling system already owned by the customer. Preferably, as part of the agreement the customer is offered incentives for leasing computing resources back to the organization at step 604. For example, during negotiation of the agreement, the customer may be offered such incentives as receiving the upgrades free of charge or at a reduced price, free Internet service or reduced Internet service rates, higher level upgrades at the price of lower level upgrades, and the like. The customer may then decide to accept or reject the lease back agreement at step 606. If the customer declines the incentives and does not wish to lease back computing services at step 606, the customers information appliance is upgraded as desired but is configured for not providing computing resources at step 608. However, if the customer accepts the incentive offered and agrees to lease back computing resources to the organization at step 606, the information handling system being upgraded is configured for furnishing computing resources for use by the organization in providing distributed computing services at step 610. Preferably, as indicated by dashed line 612, steps 602 through 610 are repeated each time a information handling system owned by a customer is upgraded. In this manner, the organization may arrange leases of computing resources on multiple information handling systems so that sufficient computing resources are continuously available. The organization may then enter agreements or contracts to provide distributed computing services to end users using the leased back computing resources at step 614.

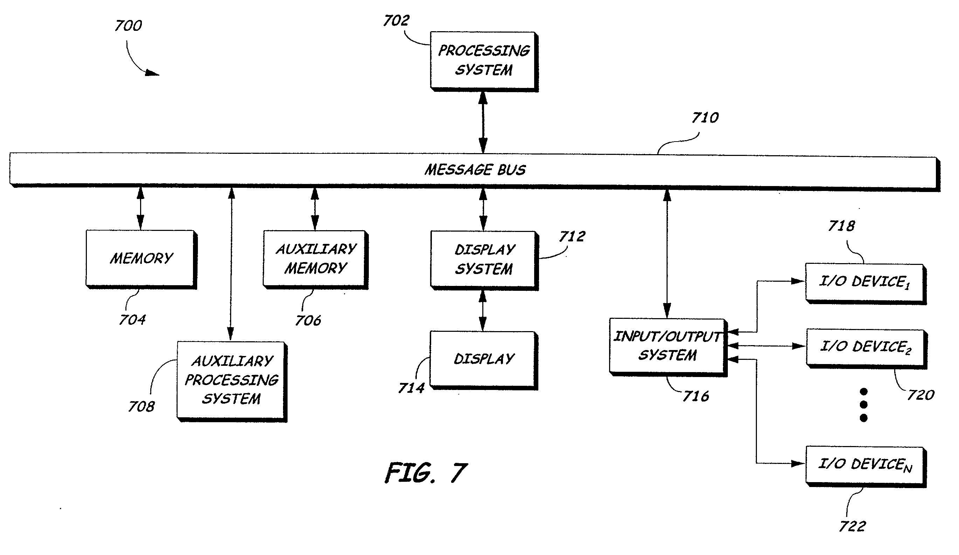

Referring now to FIG. 7, an exemplary hardware system generally representative of an information handling system sold or leased to host customers in accordance with the present invention is shown. For instance, the hardware system 700 is typical of the information handling systems purchased from the provider organization by hosts 102 and user hosts 104 (FIG. 1) who are customers of the organization. In embodiments of the invention, the hardware system 700 may also be typical of the information handling systems utilized by users 106 and system manager 110.

In the exemplary embodiment illustrated in FIG. 7, the hardware system 700 is controlled by a central processing system 702. The central processing system 702 includes a central processing unit such as a microprocessor or microcontroller for executing programs, performing data manipulations and controlling the tasks of the hardware system 700. Communication with the central processor 702 is implemented through a system bus 710 for transferring information among the components of the hardware system 700. The bus 710 may include a data channel for facilitating information transfer between storage and other peripheral components of the hardware system. The bus 710 further provides the set of signals required for communication with the central processing system 702 including a data bus, address bus, and control bus. The bus 710 may comprise any state of the art bus architecture according to promulgated standards, for example industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and so on. Other components of the hardware system 700 include main memory 704, and auxiliary memory 706. The hardware system 700 may further include an auxiliary processing system 708 as required. The main memory 704 provides storage of instructions and data for programs executing on the central processing system 702. The main memory 704 is typically semiconductor-based memory such as dynamic random access memory (DRAM) and/or static random access memory (SRAM). Other semi-conductor-based memory types include, for example, synchronous dynamic random access memory (SDRAM), Rambus dynamic random access memory (RDRAM), ferroelectric random access memory (FRAM), and so on. The auxiliary memory 706 provides storage of instructions and data that are loaded into the main memory 704 before execution. The auxiliary memory 706 may include semiconductor based memory such as read-only memory (ROM), programmable read-only memory (PROM), erasable programmable read-only memory (EPROM), electrically erasable read-only memory (EEPROM), or flash memory (block oriented memory similar to EEPROM). The auxiliary memory 706 may also include a variety of non-semiconductor-based memories, including but not limited to magnetic tape, drum, floppy disk, hard disk, optical, laser disk, compact disc read-only memory (CD-ROM), write once compact disc (CD-R), rewritable compact disc (CD-RW), digital versatile disc read-only memory (DVD-ROM), write once DVD (DVD-R), rewritable digital versatile disc (DVD-RAM), etc. Other varieties of memory devices are contemplated as well. The hardware system 700 may optionally include an auxiliary processing system 708 which may be an auxiliary processor to manage input/output, an auxiliary processor to perform floating point mathematical operations, a digital signal processor (a special-purpose microprocessor having an architecture suitable for fast execution of signal processing algorithms), a back-end processor (a slave processor subordinate to the main processing system), an additional microprocessor or controller for dual or multiple processor systems, or a coprocessor. It will be recognized that such auxiliary processors may be discrete processors or may be built in to the main processor.

The hardware system 700 further includes a display system 712 for connecting to a display device 714, and an input/output (I/O) system 716 for connecting to one or more I/O devices 718, 720, and up to N number of I/O devices 722. The display system 712 may comprise a video display adapter having all of the components for driving the display device, including video memory, buffer, and graphics engine as desired. Video memory may be, for example, video random access memory (VRAM), synchronous graphics random access memory (SGRAM), windows random access memory (WRAM), and the like. The display device 714 may comprise a cathode ray-tube (CRT) type display such as a monitor or television, or may comprise an alternative type of display technology such as a projection-type CRT display, a liquid-crystal display (LCD) overhead projector display, an LCD display, a light-emitting diode (LED) display, a gas or plasma display, an electroluminescent display, a vacuum fluorescent display, a cathodoluminescent (field emission) display, a plasma-addressed liquid crystal (PALC) display, a high gain emissive display (HGED), and so forth. The input/output system 716 may comprise one or more controllers or adapters for providing interface functions between the one or more I/O devices 718-722. For example, the input/output system 716 may comprise a serial port, parallel port, universal serial bus (USB) port, IEEE 1394 serial bus port, infrared port, network adapter, printer adapter, radiofrequency (RF) communications adapter, universal asynchronous receiver-transmitter (UART) port, etc., for interfacing between corresponding I/O devices such as a keyboard, mouse, trackball, touchpad, joystick, trackstick, infrared transducers, printer, modem, RF modem, bar code reader, charge-coupled device (CCD) reader, scanner, compact disc (CD), compact disc read-only memory (CD-ROM), digital versatile disc (DVD), video capture device, TV tuner card, touch screen, stylus, electroacoustic transducer, microphone, speaker, audio amplifier, etc. The input/output system 716 and I/O devices 718-722 may provide or receive analog or digital signals for communication between the hardware system 700 of the present invention and external devices, networks, or information sources. The input/output system 716 and I/O devices 718-722 preferably implement industry promulgated architecture standards, including Ethernet IEEE 802 standards (e.g., IEEE 802.3 for broadband and baseband networks, IEEE 802.3z for Gigabit Ethernet, IEEE 802.4 for token passing bus networks, IEEE 802.5 for token ring networks, IEEE 802.6 for metropolitan area networks, and so on), Fibre Channel, digital subscriber line (DSL), asymmetric digital subscriber line (ASDL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on.

With reference to methods 200, 300, 400, 500, and 600 of FIGS. 2, 3, 4, 5 and 6, respectively, resources of the hardware system 700 illustrated in FIG. 7 may be leased back to the provider organization in exchange for incentives such as hardware upgrades, software upgrades, and the like. For example, a lease agreement entered by the customer and provider organization may specify that the provider organization has access to processing system 702 during a specified period of the day, and is allocated a certain portion of auxiliary memory 706 (e.g., a hard drive) for storage of user data. In exchange for provision of these resources, the customer may receive upgrades to the hardware system 700, such as an improved processor for processing system 702, increased memory 704, larger auxiliary memory devices 706 such as hard drives and the like, an improved display for display system 714, and the like. Input/Output system 716 may be provided with an I/O device 718-22 furnishing high speed broadband access to network 108 for facilitating communication of data between customers contracting as hosts 102 or user/hosts 104 and users 106 or other user/hosts 104.

It should be appreciated that modification or reconfiguration of the hardware system 700 of FIG. 7 by one having ordinary skill in the art would not depart from the scope or the spirit of the present invention.

It is understood that the specific order or hierarchies of steps in the methods disclosed are examples of exemplary approaches. Based upon design preferences, it is understood that the specific order or hierarchy of steps in the method can be rearranged while remaining within the scope of the present invention. The attached method claims present elements of the various steps in a sample order, and are not meant to be limited to the specific order or hierarchy presented.

It is believed that the system and method of the present invention and many of their attendant advantages will be understood by the forgoing description, and it will be apparent that various changes may be made in the form, construction and arrangement of the components thereof without departing from the scope and spirit of the invention or without sacrificing all of its material advantages, the form herein before described being merely an explanatory embodiment thereof. It is the intention of the following claims to encompass and include such changes.

## Claims

1. A method for providing distributed computing services via a network, comprising:
receiving an order for providing an information handling system to a customer;
leasing back computing resources of the information handling system provided to the customer; and
thereafter using the leased back computing resources for providing distributed computing services.

2. The method as claimed in claim 1, further comprising configuring the information handling system for providing the leased back computing resources,
optionally ,further comprising configuring the information handling system prior to delivery of the information handling system;
optionally, further comprising providing an incentive to the customer for leasing back the computing resources;
optionally, wherein the distributed computing services comprise hosting of content on the World Wide Web (WWW); and
optionally, wherein the distributed computing services comprise at least one of storage of data and distributed processing of an application.

3. A method for providing distributed computing services via a network, comprising:
receiving an order for providing an information handling system to a customer;
leasing back computing resources of the information handling system provided to the customer;
configuring the information handling system for providing the leased back computing resources; and
using the leased back computing resources for providing distributed computing services.

4. The method as claimed in claim 3, further comprising configuring the information handling system prior to delivery of the information handling system,
optionally, further comprising providing an incentive to the customer for leasing back the computing resources.
optionally, wherein the distributed computing services comprise hosting of content on the World Wide Web (WWW); and
optionally, wherein the distributed computing services comprise at least one of storage of data and distributed processing of an application.

5. A method for providing distributed computing services via a network, comprising:
entering an agreement with a customer for providing an information handling system to a customer;
leasing back computing resources of the information handling system provided to the customer as part of the negotiated agreement;
configuring the information handling system for providing the leased back computing resources prior to provision of the information handling system to the customer; and
using the leased back computing resources for providing distributed computing services.

6. The method as claimed in claim 5, further comprising configuring the information handling system prior to delivery of the information handling system,
optionally, further comprising providing an incentive to the customer for leasing back the computing resources;
optionally, wherein the step of negotiating an agreement with a customer further comprises negotiating a lease back agreement for leasing back the computing resources;
optionally, further comprising determining if the customer is in compliance with the lease back agreement;
optionally, wherein if the customer is determined to not be in compliance with the lease back agreement, discontinuing the incentive;
optionally, further comprising, after the lease back agreement has expired, determining if the customer wishes to continue leasing back the computing resources; and
optionally, further comprising providing a second incentive to the customer for continuing leasing the computing resources.

7. The method as claimed in claim 5, wherein the distributed computing services comprise hosting of content on the World Wide Web (WWW); and
optionally, wherein the distributed computing services comprise at least one of storage of data and distributed processing of an application.

8. A system for providing distributed computing services via a network, comprising:
a system manager; and
a plurality of information handling systems furnishing computing resources suitable for use by the system manager for providing the distributed computing services, wherein the computing resources are acquired by the service provider by:
entering an agreement with a customer for providing an information handling system to a customer;
leasing back computing resources of the information handling system provided to the customer as part of the agreement; and
configuring the information handling system for providing the leased back computing resources.

9. The system as claimed in claim 8, wherein the information handling system is configured prior to delivery of the information handling system,
optionally, wherein the service provider provides an incentive to the customer for leasing back the computing resources;
optionally, wherein negotiating an agreement with a customer further comprises negotiating a lease back agreement for leasing back the computing resources;
optionally, wherein the service provider further determines if the customer is in compliance with the lease back agreement;
optionally, wherein if the customer is determined to not be in compliance with the lease back agreement, the service provider discontinues the incentive;
optionally, wherein the distributed computing services comprise hosting of content on the World Wide Web (WWW); and
optionally, wherein the distributed computing services comprise at least one of storage of data and distributed processing of an application.

10. A method for providing distributed computing services via a network, comprising steps:
entering an agreement with a customer for providing an upgrade to an information handling system to a customer;
leasing back computing resources of the information handling system for which the upgrade is provided as part of the negotiated agreement;
configuring the information handling system for providing the leased back computing resources prior to provision of the information handling system to the customer; and
using the leased back computing resources for providing distributed computing services.

11. The method as claimed in claim 10, further comprising configuring the information handling system prior to delivery of the information handling system;
optionally, wherein the distributed computing services comprise hosting of content on the World Wide Web (WWW); and
optionally, wherein the distributed computing services comprise at least one of storage of data and distributed processing of an application.
